# EUROPEAN PATENT APPLICATION

(11) **EP 2 289 607 A1**
(43) Date of publication of application: **02.03.2011**
(21) Application number: 09382131.2
(22) Date of filing: 30.07.2009
(51) Int. Cl.: B01D 21/18

(54) **Sludge sweeper scraper**

(71) Applicant: Sánchez Osma, Alonso, 08400 Granollers (ES)
(72) Inventor: Sánchez Osma, Alonso, 08400 Granollers (ES)
(74) Representative: Manresa Val, Manuel

(57) **Abstract**

It comprises a structure (1) with a longitudinal triangular section defining three faces (2,3,4), a first (2) inclined and longer than the rest, a second (3) forming a base and a third (4) that drags the sludge forwards, **characterised in that** it comprises: a prolongation (5) of the first face (2), which overhangs the third face (4), with the same inclination as the referred first face (2), and a cut-off tip (6) formed by the first (2) and second (3) faces with this cut-off (6) being perpendicular to the second face (3).

## Description

A sludge sweeper scraper of the type comprising a structure with a longitudinal triangular section that defines three faces, the first inclined and longer than the rest, a second forming a base and a third that drags the sludge forwards, **characterised in that** it comprises: a prolongation of the first face, which overhangs the third face, with the same inclination as the referred first face and a cut-off tip formed by the first and second faces, with this cut-off being perpendicular to the second face.

### BACKGROUND OF THE INVENTION

Thus, various records for sludge scrapers-sweepers have been known in the technical field for decades.

European Patent No 0532484, of 1992, in the name of K Z HANDELS AKTIEBOLAG is known in the technical field, which refers to an alternate movement scraper transport element for decanting pools and similar at water purification plants, the element of which, in the transverse section, shows a substantially triangular shape that comprises a surface directed downwards, a substantially oblique convex surface and a substantially vertical concave surface, **characterised in that** the substantially vertical concave surface is part of a circular arc and because the three sides that define the transversal section shape are connected together by acute angles.

Also known is US Patent No 1837994, in the name of D. H. E. PRESTON, of 1928, which refers to a conveyer for effecting a progressive movement of ash or other loose material at a substantially predetermined rate from one point to a remote point of discharge consisting of a member extending substantially from one of said points to the other and having distributed at spaced points through-out its length transversely extending elements each having a forward material-engaging face formed at an angle to the direction of movement of the member relatively great as compared with the angle formed by a rearward material-engaging face, and means for longitudinally reciprocating said member

Finally, as a document that is closer in time, mention should be made of German Patent No 936980, of 1950, in the name of Adolf Rumpf, which refers to a scraper with three notable configurations. A first is in the form of a triangle, in the style of the previously described patent, a second with a bulldozer-style blade and a third with a triangular configuration with a downward-inclined roof. This latter, with the roof, is inclined in order to force the material against the ground or the base.

### DISCLOSURE OF THE INVENTION

This invention is an improvement in the sludge processing machinery sector, in this case, with respect to scrapers.

The idea for over a century is that of a triangular configuration scraper, with a substantially right angle that is supported on the base and with the perpendicular side pushing the sludge in the advance stage. This is the idea given in US Patent No 1837994 and in the German Patent No 936980.

The mentioned German Patent No 936980 goes one step further and Figure 3 shows an embodiment with a roof that is inclined towards the base in order to increase the pressure on the sludge when pushing it.

Based on said triangular configuration, the inventor has incorporated a series of modifications in order to increase sludge drive capacity, but without augmenting scraper size. This is achieved by installing an overhanging prolongation on the longest side of the triangle. As such, the inclination of the prolongation is the same as that of the longest side of the triangle.

The second improvement is intended to increase scraper robustness. This is achieved by reducing the most acute angle that joins the longest side of the rectangle to the base side, so that it leaves an irregular, four-sided polygon or a triangle with a cut-off tip. Even when it could be believed that efficiency would be lost if it does not end in a tip, the actual effect is just the opposite because the rigidity replaces this lack.

A third improvement, which is intended to facilitate the installation and lightness scraper, consists of the side forming the base being, at least partially, open, which will also reduce material costs.

Finally, the face that drags the sludge forward can be inclined and, in this way, it could move the sedimented sludge without any difficulty because, as it pushes downwards and horizontally, it prevents the sludge from returning.

One object of this invention is a sludge sweeper scraper of the type comprising a structure with a longitudinal triangular section defining three faces, the first inclined and longer than the rest, a second forming a base and a third that drags the sludge forwards, **characterised in that** it comprises: a prolongation of the first face, which overhangs the third face, with the same inclination as the referred first face and a cut-off tip formed by the first and second faces, with this cut-off being perpendicular to the second face.

### A BRIEF DESCRIPTION OF THE DRAWINGS

In order to facilitate the description, this report is accompanied by three pages of drawings that represent a practical exemplary embodiment of the invention, which is for guideline purposes only and does not limit the scope of this invention:
- Figure 1 is a longitudinal sectional view of object described in this invention,
- Figure 2 is a longitudinal sectional view of another exemplary embodiment of object described in this invention, which is different to that of Figure 1,
- Figure 3 is a simulation of scraper operation in accordance with Figure 1 and
- Figure 4 is a simulation of scraper operation in accordance with Figure 2.

### EXEMPLARY EMBODIMENT OF THIS INVENTION PATENT APPLICATION

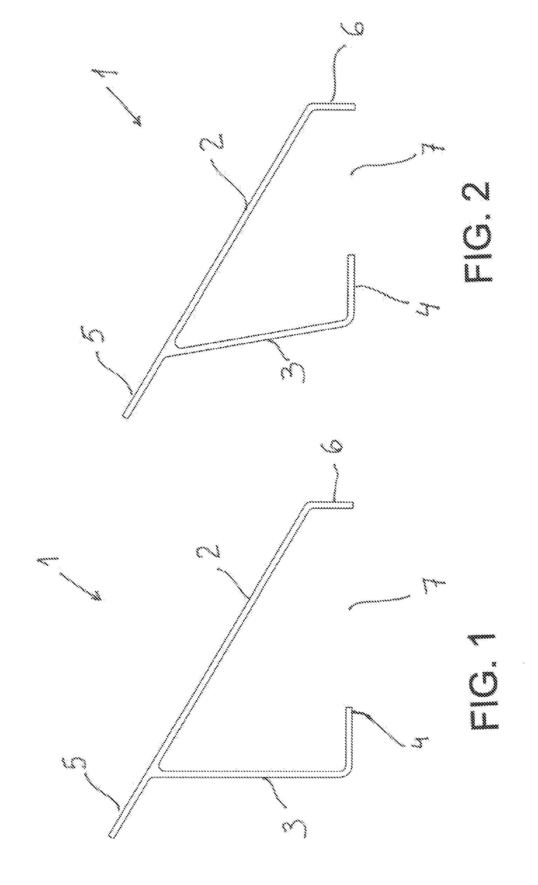

Thus, Figures 1 and 2 illustrate a structure 1 or scraper defined by a first side 2, a second side 3, a third side 4, a prolongation 5, a cut-off 6 and a lower aperture 7.

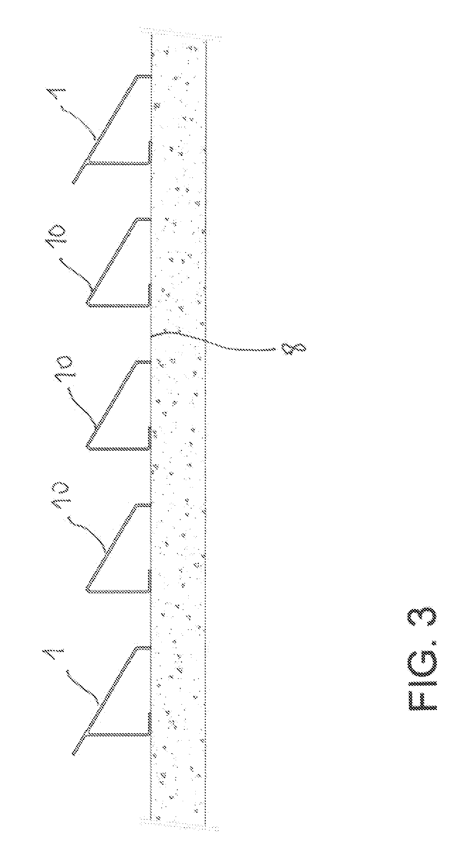

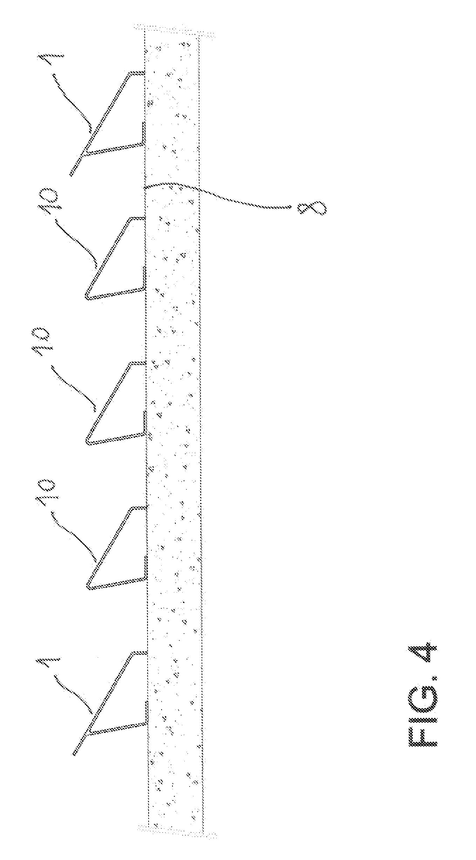

Lastly, Figures 3 and 4 are drawings of the structure 1, sliding strips 8 and a structure without prolongation 10.

In a specific exemplary embodiment, structures 1 are installed on the sliding strips 8, manufactured, for example, from polypropylene.

The special configuration of structures 1, with cut-off 6 and part of the third side 4, facilitate securing and make installation simple and, at the same time, provide excellent robustness.

Moreover, the fact that the second face 3 is partially open in this embodiment, defining a lower aperture 7, means that structure 1 is lighter, since it is hollow, which, because of the advantages described in the previous paragraph, does not mean that it is lacking in rigidity and robustness. Being hollow also means that structure 1 provides a savings in material.
Figure 1 shows an embodiment with a prolongation 5 of first side 2, which overhangs side 3. This prolongation 5 increases the sludge drive capacity without augmenting its size because it provides more space for sedimentation production without having to change scraper 1 size. As such, the inclination of the prolongation 5 is the same as that of first side 2.
Figure 2 us a modification of Figure 1 in which second side 3 is inclined with respect to third side 4. This inclination exceeds 90º. It has been observed that determined types of sludge sediment at different rates, there is a problem with sludge return and it is more difficult to move it. Thus, with said inclination of second side 3, the sedimented sludge can be moved without any problems because it is pushed downwards and horizontally and so prevents its return.
Figures 3 and 4 are exemplary embodiments of said scrapers mounted one an operating line. Thus, the employment of scraper 1, the object of this invention, has been shown to be very positive, between three scrapers 10 that are known in the technical field.

Operation may be versions adapted from those described in patents DE936980, US1837994 or SE454140, all of which are in the public domain.

This invention patent is a new Sludge Sweeper Scraper. The embodiments mentioned here so not limit this invention and thus may have different applications and/or adaptations, all of which are within the scope of the following claims.

## Claims

1. A sludge sweeper scraper of the type comprising a structure (1) with a longitudinal triangular section defining three faces (2,3,4), a first (2) inclined and longer than the rest, a second (3) forming a base and a third (4) that drags the sludge forwards, **characterised in that** it comprises:
- a prolongation (5) of the first face (2), which overhangs the third face (4), with the same inclination as the referred first face (2), and
- a cut-off tip (6) formed by the first (2) and second (3) faces with this cut-off (6) being perpendicular to the second face (3).

2. A scraper, in accordance with claim 1, **characterised in that** second face (3), is, at least, partially open, defining a lower aperture (7).

3. A scraper, in accordance with claim 1, **characterised in that** third face (4) is inclined with respect to second face (3) at an angle exceeding 90º.
